# EUROPÄISCHE PATENTSCHRIFT

(11) **EP 2 285 233 B1**
(45) Veröffentlichungstag und Bekanntmachung des Hinweises auf die Patenterteilung: **03.06.2015**
(21) Anmeldenummer: 09772006.4
(22) Anmeldetag: 29.06.2009
(51) Int. Cl.: A23J 1/14

(54) **VERFAHREN ZUR HERSTELLUNG EINER FEUCHTEN PROTEINMASSE UND DEREN ANWENDUNG**
PROCESS FOR THE PREPARATION OF A MOIST PROTEIN BIOMASS AND ITS USE
PROCÉDÉ D'ÉLABORATION DE SUBSTANCE PROTÉIQUE HUMIDE ET SON UTILISATION

(30) Priorität: 30.06.2008 DE 102008030325; 28.10.2008 DE 102008053587
(43) Veröffentlichungstag der Anmeldung: 23.02.2011
(73) Patentinhaber: Fraunhofer-Gesellschaft zur Förderung der angewandten Forschung, 80686 München (DE)
(72) Erfinder: PICKARDT, Claudia, 85354 Freising (DE); ZACHERL, Christian, 85356 Freising (DE); EISNER, Peter, 85354 Freising (DE); HASENKOPF, Katrin, 85354 Freising (DE)
(74) Vertreter: Gagel, Roland
(86) Internationale Anmeldenummer: PCT/DE2009/000918
(87) Internationale Veröffentlichungsnummer: WO 2010/000236

(56) Entgegenhaltungen:
- WO-A-2004/000032
- WO-A-2008/000213
- WO-A-2008/089735
- US-A- 4 285 862
- US-A1- 2004 005 395

## Beschreibung

### Technisches Gebiet

Die Erfindung betrifft ein Verfahren zur Herstellung eines pflanzlichen Proteinpräparats in Form einer feuchten Proteinmasse zur Texturverbesserung von Lebensmitteln mit verbesserten organoleptischen Eigenschaften.

### Stand der Technik

Der Einsatz von pflanzlichen Proteinen in Lebensmitteln gewinnt zunehmend an Bedeutung. Neben ihrer guten Ökoeffizienz und ihren niedrigen Herstellungskosten zeichnet sich eine Reihe von Pflanzenproteinen durch eine gesundheitsfördernde Wirkung aus. Weiterhin werden Proteinpräparate Lebensmitteln als funktionelle Zutaten zugesetzt.

Handelsübliche Pflanzenproteinpräparate besitzen gute Emulgier- und Schaumbildeeigenschaften, eine hohe Wasserbindekapazität und eine hohe Gelfestigkeit. Bekannt ist auch der Zusatz von tierischen und pflanzlichen Proteinpräparaten zur gezielten Texturverbesserung von Lebensmitteln. Bekannte Proteinpräparate zur Texturverbesserung und zur Herstellung eines glatten und cremigen Gefühls können durch unterschiedliche Verfahren gewonnen werden, wobei meist kugelförmige Partikel und/oder sehr kleine Partikel hergestellt werden.

Aufgrund der guten Transport- und Lagereigenschaften werden diese Produkte zu Pulvern getrocknet und müssen zur Anwendung in Lebensmitteln rehydratisiert werden, wofür allerdings effiziente Dosier- und Mischeinrichtungen notwendig sind. Ein weiterer Nachteil der getrockneten Produkte liegt in der möglichen Bildung von Partikelaggregaten bei der Trocknung oder bei der Einarbeitung ins Lebensmittel, die zu einem sandigen Eindruck im Mund führen können. Eine ungleichmäßige Verteilung der Proteinpartikel im Produkt kann den Verlust der glatten und cremigen Eigenschaften zur Folge haben.

Die WO 2008/000213 beschreibt ein Verfahren zur Herstellung des pflanzlichen Proteinpräparates, bei dem pflanzliche Proteine in einem Lösemittel gelöst oder suspendiert werden. Durch eine gleichzeitige und in einer kurzen Zeit erfolgende Absenkung der Ionenkonzentration und der Temperatur erfolgt eine Anlagerung der Proteine aneinander. Die sich dabei aus den einzelnen Proteinen bildenden Proteinpartikel fallen aus der Lösung aus. Im Anschluss an die Fällung der Proteinpartikel werden diese von dem sie umgebenden Lösemittel durch ein mechanisches Abtrennverfahren getrennt. Die dabei erhaltene Proteinmasse kann als Proteinpräparat in Lebensmitteln eingesetzt werden.

Allerdings können beim Einsatz dieser Proteinmasse als Fettaustauschprodukt in Lebensmitteln beim späteren Erhitzen des Lebensmittels unerwünschte pflanzenartige Fehlaromen auftreten, die u.a. als bohnig, grasig, bitter und "grün" beschrieben werden. Vor allem die Verwendung von proteinhaltigem Ausgangsmaterial aus Leguminosen, besonders Lupine, ist hinsichtlich der sensorischen Eigenschaften des Endprodukts schwierig, da diese Pflanzen einen hohen Anteil an Bitterstoffen sowie an grasig, bohnig, grün schmeckenden Stoffen aufweisen. Diese Fehlaromen können insbesondere dann auftreten, wenn das Lebensmittel zum Zweck der Zubereitung auf Temperaturen über 60°C erhitzt wird.

Aufgabe der vorliegenden Erfindung ist es daher, ein Verfahren zur Herstellung eines pflanzlichen Proteinpräparats anzugeben, das einen geringeren Anteil an unerwünschten Fehlaromen nach einer Erhitzung des Lebensmittels verursacht, in dem es verarbeitet wurde.

### Darstellung der Erfindung

Die Aufgabe wird mit den Verfahren nach Patentansprüchen 1 und 2 gelöst. Vorteilhafte Ausgestaltungen der Verfahren sind Gegenstand der abhängigen Patentansprüche oder lassen sich der nachfolgenden Beschreibung entnehmen.

Das erfindungsgemäße feuchte Proteinpräparat, im Folgenden auch als Proteinmasse bezeichnet, das vorzugsweise als Fettaustauschprodukt eingesetzt wird, weist im Gegensatz zu herkömmlichen Fettaustauschern einen Wassergehalt von mehr als 30 Gew.-% auf und wird ohne Trocknung hergestellt. Es liegt als wässriges Gemisch von Protein und pflanzlichen Begleitstoffen als eine homogene Masse vor, die in feuchter Form zum Austausch von Fett in Lebensmitteln eingesetzt werden kann.

Der oben beschriebene störende Aromaeindruck wird bei dem vorgeschlagenen Verfahren dadurch vermindert, dass die Pflanzenproteinlösung nach dem Schritt der Fällung der Proteine oder die proteinreiche Masse vor oder nach dem Einbringen in das Lebensmittel und vor einer Fertigstellung des Lebensmittels auf eine Temperatur von ≥ 45°C erwärmt und für einen Zeitraum auf dieser Temperatur gehalten wird. Der Zeitraum und die Temperatur werden dabei so gewählt, dass die Anwendungs- und Verarbeitungseigenschaften der proteinreichen Masse durch diesen Schritt nicht verändert werden. Unter den Anwendungseigenschaften wird hierbei das glatte Gefühl beim Verzehr der proteinreichen Masse, unter den Verarbeitungseigenschaften werden die pastöse Konsistenz und glatte Textur verstanden. Vorzugsweise wird dies durch Wahl eines Zeitraums und einer Temperatur erreicht, bei denen eine irreversible Hitzedenaturierung der Proteine weitgehend vermieden wird, d.h. bei denen ein Anteil von ≥ 80% der Proteine in der proteinreichen Masse nicht irreversibel denaturiert werden.

Diese Maßnahme geht auf die überraschende Erkenntnis der Erfinder zurück, dass der störende Aromaeindruck, der bisher beim Erhitzen eines mit der oben beschriebenen feuchten Proteinmasse des Standes der Technik verarbeiteten Lebensmittels auftritt, weniger intensiv wahrgenommen wird, wenn das Lebensmittel ein zweites Mal erhitzt wird. Daher wird beim vorgeschlagenen Verfahren das Lebensmittel mit der eingearbeiteten Proteinmasse vor der Fertigstellung des Lebensmittels, d.h. bevor es als Endprodukt bereitgestellt wird, einmal vorerwärmt. Alternativ kann auch die Proteinmasse selbst oder die Pflanzenproteinlösung während der Herstellung der Proteinmasse entsprechend vorerwärmt werden.

Das Proteinpräparat wird durch Fällung von Proteinen aus salzhaltigen Pflanzenproteinlösungen gewonnen, indem die Temperatur und/oder die Ionenstärke der Lösung erniedrigt wird, wobei sich eine proteinreiche Masse bildet, die vom Wasser abgetrennt wird.

Hierzu werden die Proteine aus einem pflanzlichen Rohstoff vorzugsweise mit einer Salzlösung im Verhältnis 1:3-1:20 (Rohstoff:Salzlösung), am besten 1:5 - 1:10 extrahiert. Diese Lösung hat einen Salzgehalt von 0,5 bis 10 Gew.-%, besser 2-4 Gew.-%, Kochsalz (Natriumchlorid) oder eine vergleichbare Konzentration eines anderen Salzes und wird zur Extraktion vorzugsweise auf eine Temperatur von bis zu 30°C oder zwischen 40 und 50°C erwärmt. Eine Temperatur von ≥ 45° kann hier bereits den obigen Vorerwärmungsschritt darstellen, d.h. zu einer deutlichen Reduzierung des störenden Aromaeindrucks führen. Vorzugsweise wird jedoch zu einem späteren Zeitpunkt nochmals auf eine höhere Temperatur erwärmt.

Nach der Proteinextraktion werden ungelöste Bestandteile des Rohstoffs durch mechanische Trennverfahren, beispielsweise Zentrifugation oder Filtration abgetrennt. Zur Gewinnung der Proteinmasse wird die Temperatur und/oder der Salzgehalt (Ionenstärke) der Pflanzenproteinlösung erniedrigt, indem der Proteinextrakt beispielsweise mit salzfreiem oder salzarmem Eiswasser im Verhältnis 1:1 bis 1:10 (Proteinextrakt:Eiswasser), bevorzugt 1:2 - 1:4 vermischt wird. Die Proteinmasse wird aus der verdünnten Lösung durch Sedimentation oder Zentrifugation abgetrennt. Weitere mechanische Verfahren zur Aufkonzentrierung und Abtrennung, z.B. Filtration, sind möglich, wobei Sedimentaionsverfahren bevorzugt Anwendung finden. Zur Fällung der Proteine kann die Pflanzenproteinlösung auch ohne Abkühlung mit salzfreiem oder salzarmem Wasser in obigem Verhältnis vermischt werden. Auch eine reine Abkühlung der Pflanzenproteinlösung, vorzugsweise mit Eiswasser, ist möglich. Weiterhin besteht auch die Möglichkeit, die Pflanzenproteinlösung zur Fällung der Proteine zunächst mit salzfreiem oder salzarmem Wasser zu verdünnen und anschließend abzukühlen.

Die mit dem erfindungsgemäßen Verfahren gewonnene Proteinmasse hat typischerweise einen Proteingehalt von ca. 30 Gew.-% bis 70 Gew.-% einen Wassergehalt von etwa 30 Gew.-% bis 70 Gew.-% und zeigt hervorragende Eigenschaften zur Einstellung einer weichen, glatten und cremigen Textur in Lebensmitteln. Durch Änderung der Sedimentationsbedingungen können der Proteingehalt und der Wassergehalt verändert werden. Durch Sedimentation für eine Zeit von 10 Stunden bei 1 °C kann eine Proteinmasse mit einem Wassergehalt von 80 Gew.-% und einem Proteingehalt (N x 6.25) in der Trockenmasse von 80 Gew.-% erreicht werden. Eine Zentrifugation bei 3000 g für 10 min führt zur Absenkung des Wasseranteils in der Proteinmasse auf Anteile unter 60 Gew.-% bei gleichzeitiger Erhöhung des Proteingehalts. Der Proteingehalt kann durch Abreicherung von Salzen durch erneute Verdünnung mit einem kalten salzarmen Lösungsmittel und anschließende Abtrennung auf Werte über 90 Gew.-% in der Trockenmasse gesteigert werden. Die Produktausbeute der feuchten Fettaustausch-Proteinmasse liegt je nach eingesetztem Rohstoff und Grad der Aufkonzentrierung bei 20 - 150 % bezogen auf die Rohstoffmasse, wobei die Ausbeute an Trockenmasse zwischen 20 und 80 % beträgt.

Die erhaltene erfindungsgemäße Proteinmasse zeichnet sich gegenüber anderen Produkten durch eine besondere Konsistenz aus. Die Proteinmasse ist eine homogene Masse mit konzentrations- und temperaturabhängig veränderlicher zäher, teilweise gelartiger Konsistenz und zeigt je nach Feuchtegehalt und Temperatur rheologische Eigenschaften wie Mayonnaise, Honig bzw. Pudding. Bei Betrachtung unter dem Mikroskop oder unter einem Rasterelektronenmikroskop sind keine definierten Strukturen zu erkennen. Beim Verzehr ruft die Proteinmasse ein vollmundiges cremiges bis pastöses und glattes Gefühl im Mund hervor.

Da die Proteinmasse nicht getrocknet wird, kann sie in pastöser oder hochviskoser Form z.B. als Ersatz von Fett in unterschiedlichste Lebensmittel eingearbeitet werden. Die Lebensmittel werden dabei mit einer weichen, cremigen Textur versehen, so dass in der Rezeptur auf einen Teil des Fettes verzichtet werden kann, ohne dass ein trockener rauer Eindruck entsteht. Dies kann ernährungsphysiologische Vorteile bringen. Durch das beschriebene Fällverfahren mit Absenkung der Temperatur und/oder Ionenstärke ist die Proteinmasse nicht oder nur schlecht in Wasser löslich. Sie bindet jedoch eine bestimmte Menge Flüssigkeit und kann in begrenztem Umfang sowohl mit Wasser als auch mit Fett zu einer stabilen homogenen Masse vermischt werden. Der Wassergehalt kann insbesondere durch die Wahl der Trennbedingungen über Sedimentation eingestellt werden. Der Wassergehalt im fertigen Lebensmittel kann im Bereich von 2 bis 90% und der Fettgehalt von 0 bis 60% liegen, bevorzugt zwischen 1 und 10 bis 30 %. Ein maximaler Fettgehalt von 60% würde sich beispielsweise beim Einsatz in einer fettreduzierten Mayonnaise ergeben.

Die erfindungsgemäße Proteinmasse hat dadurch Vorteile gegenüber den am Markt verfügbaren pulverförmigen Produkten zum Fettaustausch in Lebensmitteln hinsichtlich der Dosierung und Handhabbarkeit dadurch, dass eine Rehydratisierung nicht nötig ist. Gegenüber partikulären pulverförmigen Präparaten hat sie eine besonders glatte und/oder cremige Konsistenz und Homogenität. Ein weiterer Vorteil ist die Kostenersparnis durch Wegfall der Trocknung.

Die erfindungsgemäße Proteinmasse weist im rohen Zustand einen neutralen bis leicht salzigen Geschmack auf. Dieser kann durch einen oder mehrere Waschschritte, wie oben beschrieben, entfernt werden.

Eine besonders gute Abreicherung der störenden Aromen wird erreicht, wenn das Lebensmittel mit der eingearbeiteten Proteinmasse auf eine Temperatur ≥ 45°C, bevorzugt ≥ 55°C, erwärmt und für eine Haltezeit von mehreren Minuten, beispielsweise 10 - 60 min, bei dieser.Temperatur gehalten wird. Bei diesen Temperaturen wird in Abhängigkeit von der gewählten Verweilzeit und abhängig vom Rohstoff eine Hitzedenaturierung des Fettaustauscher-Proteins vermieden und der besonders weiche, cremige und glatte Eindruck im Mund erhalten. Überraschenderweise zeigte sich, dass auch eine Erwärmung über 60°C ohne Verlust dieser Eigenschaften einhergeht, wenn je nach Höhe der Temperatur eine entsprechend kurze Zeit der Erhitzung nicht überschritten wird. Beispielsweise können die Fehlaromen auch bei einer kurzen Erhitzung von 15-30 s bei 72-75°C so verändert werden, dass sie bei einer erneuten Erwärmung des Lebensmittels nicht mehr störend hervortreten. Eine Erhitzung auf höhere Temperaturen ähnlich bekannten Verfahren zur Hitzebehandlung von Milchprodukten ist denkbar, beispielsweise eine Erhitzung auf 85 - 90°C für 1 - 20 s oder auf 130 bis 140°C für 0,1 bis 30 s.

Besonders gute Ergebnisse werden auch erreicht, wenn die Proteinmasse vor dem Einsatz im Lebensmittel mit Wärme behandelt wird. In einer Ausgestaltung wird die Proteinmasse auf eine Temperatur von 55 bis 65°C erhitzt und für eine Zeitspanne bei dieser Temperatur gehalten. Sie wird vor dem Einsatz im Lebensmittel auf eine Temperatur von 4 - 10°C abgekühlt. In einer weiteren Ausgestaltung kann die Proteinmasse ohne Abkühlung direkt in das Lebensmittel eingearbeitet werden. Als besonders vorteilhaft erweist sich die hierbei erniedrigte Viskosität, die ein Vermischen mit den Rezepturbestandteilen vereinfacht.

In einer weiteren Ausführung kann der Erhitzungsschritt auch nach der Proteinfällung durchgeführt werden, bevor die Abtrennung der Proteine aus dem Gemisch erfolgt. Hierbei zeigt sich, dass die Ausbeute und die glatte Textur des abgetrennten Proteinpräparates durch den Erhitzungsschritt nicht oder nur sehr wenig beeinträchtigt werden, insbesondere wenn die Temperaturen 75°C nicht überschreiten.

Die bei dem vorgeschlagenen Verfahren durchgeführten Vor-Erhitzungen sind geeignet, um bei einer erneuten Erhitzung, wie sie häufig beim bestimmungsgemäßen Einsatz des Lebensmittels erforderlich ist, die Ausbildung und das hervortreten störender Aromaeindrücke im Lebensmittel zu verhindern und gleichzeitig die geschmeidige Textur der Proteinmasse zu erhalten, wobei die Erhitzung an der rohen Proteinmasse oder während deren Herstellung oder Verarbeitung angewendet werden kann.

Eine Erwärmung auf Temperaturen oberhalb 100°C unter Druck kann angewendet werden, wenn die Zeit der Behandlung auf wenige Sekunden bis Minuten beschränkt wird. Beispielsweise kann eine Temperatur von 130-150°C für 0,1 bis maximal 30 s, bevorzugt für 2-10 s, angewendet werden. Eine Erhitzung auf 120°C ist für eine Zeit von 10 s bis maximal 3 Minuten möglich, abhängig vom Verdünnungsgrad der Proteinmasse, wobei die Aromastabilisierung bei niedrigeren Temperaturen und längerer Zeit effektiver ist.

Bevorzugt wird die Proteinmasse, oder noch besser die Proteinlösung während der Herstellung auf 55°C bis 75°C für 40 min bis 1 min erwärmt oder auf 75°C bis 85 °C für 60 s - 1 s, wobei vorzugsweise kürzere Verweilzeiten mit höheren Temperaturen kombiniert werden. Bei besonders hoher Konzentration an störenden Aromakomponenten kann auch eine längere Behandlung von 1-30 Minuten bei Temperaturen über 75°C nötig sein, um diese vor einer weiteren Erhitzung zu stabilisieren.

Die Durchführung des Erhitzungsschritts vor Abtrennung des Fällungsüberstands ist besonders vorteilhaft, weil mit der abgetrennten Flüssigkeit Aromastoffe entfernt werden, die bei der Erhitzung aus dem Protein in die Flüssigkeit überführt werden. Gleichzeitig sinkt mit größerem Wassergehalt die Hitzesensibilität der Proteine, so dass die glatte Textur des Proteinpräparates auch bei höheren Temperaturen bis 80°C nicht beeinträchtigt wird.

Die nach dem erfindungsgemäßen Verfahren hergestellte Proteinmasse enthält nach dem Erhitzen pflanzeneigene Begleitstoffe in derart niedriger Konzentration oder in nicht aromawirksamer Konzentration, dass dadurch Textur, Geschmack und Aromaeindruck in der geplanten Anwendung nicht beeinträchtigt werden. Weiterhin kann die Masse verfahrensbedingt Reste von Salzen und Zuckern enthalten, die jedoch je nach Anwendung nicht störend wirken.

### Vergleichsbeispiel

Im Folgenden wird die Herstellung eines feuchten Proteinproduktes beschrieben:
1. Einrühren von zerkleinertem, proteinhaltigem pflanzlichen Rohstoff (z.B. Lupinenflakes oder Lupinenmehl) in H₂O mit einem Salzgehalt von 2 Gew.-% NaCl bei einer Temperatur von 40°C. Verhältnis pflanzlicher Rohstoff zu Extraktionsmittel 1:10.
2. Einstellen des pH-Wertes auf 6,8; Rühren bei 100 RPM für 20 Minuten bei 40 °C.
3. Zentrifugation für 5 Minuten bei 20000 g und Verwerfen des Bodensatzes.
4. Erwärmen des Extrakts auf 55 °C für 30 min.
5. Abkühlen des Extrakts auf 40°C und Überführen des Extraktes (Temperatur 40°C) mit einer Schlauchpumpe durch Eindüsen in salzfreies Wasser (Temperatur 3°C). Verhältnis Extrakt zu salzfreiem Wasser 1:3.
6. Bei der Temperatur von 3°C präzipitieren lassen für 10 Stunden.
7. Abziehen des klaren Überstandes.
8. Zentrifugation des präzipitierten Bodensatzes für 5 Minuten bei 20000 g zur weiteren Entwässerung
9. Verwerfen des Überstandes.
10. Präzipitat: Proteinprodukt.

## Patentansprüche

1. Verfahren zur Herstellung eines feuchten pflanzlichen Proteinpräparats für ein Lebensmittel durch
- Einbringen eines proteinhaltigen pflanzlichen Rohstoffes zur Extraktion von Proteinen in ein wässriges Extraktionsmittel, das einen Salzgehalt aufweist, um eine salzhaltige Pflanzenproteinlösung zu erhalten,
- Fällung der Proteine aus der salzhaltigen Pflanzenproteinlösung durch Erniedrigung einer Temperatur und/oder einer Ionenstärke der Pflanzenproteinlösung, und
- Abtrennen der gefällten Proteine als feuchte proteinreiche Masse vom wässrigen Extraktionsmittel, **dadurch gekennzeichnet,**
**dass** die Pflanzenproteinlösung nach dem Schritt der Fällung der Proteine oder die feuchte proteinreiche Masse auf eine Temperatur von ≥ 45°C erwärmt und für einen Zeitraum auf dieser Temperatur gehalten wird, wobei der Zeitraum und die Temperatur so gewählt werden, dass Anwendungs- und Verarbeitungseigenschaften der feuchten proteinreichen Masse durch diesen Schritt nicht verändert werden.

2. Verfahren zur Herstellung eines Lebensmittels, dem ein feuchtes Proteinpräparat aus pflanzlichen Proteinen beigefügt wird,
- bei dem das Proteinpräparat hergestellt wird durch - Einbringen eines proteinhaltigen pflanzlichen Rohstoffes zur Extraktion von Proteinen in ein wässriges Extraktionsmittel, das einen Salzgehalt aufweist, um eine salzhaltige Pflanzenproteinlösung zu erhalten,
- Fällung der Proteine aus der salzhaltigen Pflanzenproteinlösung durch Erniedrigung einer Temperatur und/oder einer Ionenstärke der Pflanzenproteinlösung, und
- Abtrennen der gefällten Proteine als feuchte proteinreiche Masse vom wässrigen Extraktionsmittel,
**dadurch gekennzeichnet,**
**dass** die Pflanzenproteinlösung nach dem Schritt der Fällung der Proteine oder die feuchte proteinreiche Masse vor oder nach dem Einbringen in das Lebensmittel und vor einer Fertigstellung des Lebensmittels auf eine Temperatur von ≥ 45°C erwärmt und für einen Zeitraum auf dieser Temperatur gehalten wird, wobei der Zeitraum und die Temperatur so gewählt werden, dass Anwendungs- und Verarbeitungseigenschaften der feuchten proteinreichen Masse durch diesen Schritt nicht verändert werden.

3. Verfahren nach Anspruch 1 oder 2,
**dadurch gekennzeichnet,**
**dass** der Zeitraum und die Temperatur so gewählt werden, dass eine irreversible Hitzedenaturierung der Proteine weitgehend vermieden wird.

4. Verfahren nach Anspruch 2 oder 3,
**dadurch gekennzeichnet,**
**dass** das Lebensmittel mit der proteinreichen Masse auf eine Temperatur von ≥ 55°C erwärmt und für einen Zeitraum von mehreren Minuten auf dieser Temperatur gehalten wird.

5. Verfahren nach einem der Ansprüche 1 bis 4,
**dadurch gekennzeichnet,**
**dass** die proteinreiche Masse oder die Pflanzenproteinlösung nach der Fällung auf eine Temperatur von 55°C bis 75°C erwärmt und für den gewählten Zeitraum auf dieser Temperatur gehalten wird.

6. Verfahren nach Anspruch 5,
**dadurch gekennzeichnet,**
**dass** die proteinreiche Masse oder die Pflanzenproteinlösung nach der Fällung für den Zeitraum von 40 min bis 1 min auf der Temperatur gehalten werden.

7. Verfahren nach einem der Ansprüche 1 bis 3,
**dadurch gekennzeichnet,**
**dass** die proteinreiche Masse oder die Pflanzenproteinlösung auf eine Temperatur von 75°C bis 85 °C erwärmt und für einen Zeitraum von 60 s - 1 s auf dieser Temperatur gehalten wird.

8. Verfahren nach einem der Ansprüche 1 bis 3,
**dadurch gekennzeichnet,**
**dass** die proteinreiche Masse oder die Pflanzenproteinlösung auf eine Temperatur von 85°C bis 140 °C erwärmt und für einen Zeitraum von 1 s - 0,1 s auf dieser Temperatur gehalten wird.

9. Verfahren nach einem der Ansprüche 1 bis 8,
**dadurch gekennzeichnet,**
**dass** das Einbringen des proteinhaltigen pflanzlichen Rohstoffes in eine wässrige Salzlösung als wässriges Extraktionsmittel in einem Verhältnis von 1:3 - 1:20, insbesondere 1:5 - 1:10, erfolgt.

10. Verfahren nach Anspruch 9,
**dadurch gekennzeichnet,**
**dass** in der wässrigen Salzlösung ein Salzgehalt von 0,5 bis 10 Gew.-%, insbesondere 2-4 Gew.-%, eingestellt wird.

11. Verfahren nach Anspruch 9 oder 10,
**dadurch gekennzeichnet,**
**dass** die wässrige Salzlösung zur Extraktion der Proteine auf eine Temperatur von bis zu 30°C oder zwischen 40 und 50°C erwärmt wird.

12. Verfahren nach einem der Ansprüche 1 bis 11,
**dadurch gekennzeichnet,**
**dass** die Pflanzenproteinlösung zur Fällung der Proteine mit salzfreiem oder salzarmem Wasser im Verhältnis 1:1 bis 1:10, bevorzugt 1:2 - 1:4, vermischt wird.

13. Verfahren nach einem der Ansprüche 1 bis 12,
**dadurch gekennzeichnet,**
**dass** die Pflanzenproteinlösung zur Fällung der Proteine abgekühlt wird, wobei die Abkühlung insbesondere durch Vermischung mit Eiswasser erfolgt.

14. Verfahren nach einem der Ansprüche 1 bis 11,
**dadurch gekennzeichnet,**
**dass** die Pflanzenproteinlösung zur Fällung der Proteine mit salzfreiem oder salzarmem Wasser verdünnt und anschließend abgekühlt wird.

15. Verfahren nach einem der Ansprüche 1 bis 11,
**dadurch gekennzeichnet,**
**dass** die Pflanzenproteinlösung zur Fällung der Proteine mit salzfreiem oder salzarmem Eiswasser im Verhältnis 1:1 bis 1:10, bevorzugt 1:2 - 1:4, vermischt wird.

16. Verfahren nach Anspruch 4,
**dadurch gekennzeichnet, dass** das Lebensmittel für 10 min bis 60 min auf dieser Temperatur gehalten wird.

17. Verfahren nach einem der Ansprüche 2 oder 3,
**dadurch gekennzeichnet, dass** das Lebensmittel auf eine Temperatur von 72°C bis 75 °C erwärmt und für einen Zeitraum von 15 s - 30 s auf dieser Temperatur gehalten wird, oder
das Lebensmittel auf eine Temperatur von 85°C bis 90 °C erwärmt und für einen Zeitraum von 1 s - 20 s auf dieser Temperatur gehalten wird, oder
das Lebensmittel auf eine Temperatur von 130°C bis 140 °C erwärmt und für einen Zeitraum von 0,1 s - 30 s auf dieser Temperatur gehalten wird.

## Claims

1. A method for manufacturing a moist vegetable protein preparation for a food, by
- introducing, in order to extract proteins, a protein-containing vegetable raw material into an aqueous extraction medium which has a salt content, in order to obtain a salt-containing vegetable protein solution,
- precipitating the proteins from the salt-containing vegetable protein solution by reducing a temperature and/or an ionic strength of the vegetable protein solution, and
- separating the precipitated proteins as a moist protein-rich mass from the aqueous extraction medium,
**characterized in that**
the vegetable protein solution after the step for precipitating the proteins or the moist protein-rich mass is heated to a temperature of ≥ 45 °C and is maintained at this temperature for a period of time, wherein the period of time and the temperature are selected such that application and processing properties of the moist protein-rich mass are not changed by this step.

2. A method for manufacturing a food, to which a moist protein preparation formed from vegetable proteins has been added,
- in which the protein preparation is manufactured by
- introducing, in order to extract proteins, a protein-containing vegetable raw material into an aqueous extraction medium which has a salt content, in order to obtain a salt-containing vegetable protein solution,
- precipitating the proteins from the salt-containing vegetable protein solution by reducing a temperature and/or an ionic strength of the vegetable protein solution, and
- separating the precipitated proteins as a moist protein-rich mass from the aqueous extraction medium,
**characterized in that**
the vegetable protein solution after the step for precipitating the proteins or the moist protein-rich mass before or after introduction into the food and before preparing the food is heated to a temperature of ≥ 45 °C and is maintained at this temperature for a period of time, wherein the period of time and the temperature are selected such that application and processing properties of the moist protein-rich mass are not changed by this step.

3. The method as claimed in claim 1 or 2,
**characterized in that**
the period of time and the temperature are selected such that an irreversible denaturing of the protein by heat is substantially prevented.

4. The method as claimed in claim 2 or 3,
**characterized in that**
the food with the protein-rich mass is heated to a temperature of ≥ 55 °C and maintained at this temperature for a period of time of several minutes.

5. The method as claimed in one of claims 1 to 4,
**characterized in that**
the protein-rich mass or the vegetable protein solution after precipitation is heated to a temperature of 55 °C to 75 °C and maintained at this temperature for the selected period of time.

6. The method as claimed in claim 5,
**characterized in that**
the protein-rich mass or the vegetable protein solution after precipitation is maintained at the temperature for a period of time of 40 min to 1 min.

7. The method as claimed in one of claims 1 to 3,
**characterized in that**
the protein-rich mass or the vegetable protein solution is heated to a temperature of 75 °C to 85 °C and maintained at this temperature for a period of time of 60 s - 1 s.

8. The method as claimed in one of claims 1 to 3,
**characterized in that**
the protein-rich mass or the vegetable protein solution is heated to a temperature of 85 °C to 140 °C and maintained at this temperature for a period of time of 1 s - 0.1 s.

9. The method as claimed in one of claims 1 to 8,
**characterized in that**
the protein containing vegetable raw material is introduced into an aqueous salt solution as an aqueous extraction medium in a ratio of 1:3 - 1:20, in particular 1:5 - 1:10.

10. The method as claimed in claim 9,
**characterized in that**
the salt content in the aqueous salt solution is adjusted to 0.5% to 10% by weight, in particular 2 - 4% by weight.

11. The method as claimed in claim 9 or 10,
**characterized in that**
in order to extract the proteins, the aqueous salt solution is heated to a temperature of up to 30 °C or between 40 °C and 50 °C.

12. The method as claimed in one of claims 1 to 11,
**characterized in that**
in order to precipitate the proteins, the vegetable protein solution is mixed with salt-free or low-salt water in a ratio of 1:1 to 1:10, preferably 1:2 - 1:4.

13. The method as claimed in one of claims 1 to 12,
**characterized in that**
in order to precipitate the proteins, the vegetable protein solution is cooled down, wherein in particular, the cooling is carried out by mixing with ice water.

14. The method as claimed in one of claims 1 to 11,
**characterized in that**
in order to precipitate the proteins, the vegetable protein solution is diluted with salt-free or low-salt water and then cooled down.

15. The method as claimed in one of claims 1 to 11,
**characterized in that**
in order to precipitate the proteins, the vegetable protein solution is mixed with salt-free or low-salt ice water in a ratio of 1:1 to 1:10, preferably 1:2 - 1:4.

16. The method as claimed in claim 4,
**characterized in that**
the food is maintained at this temperature for 10 min to 60 min.

17. The method as claimed in claim 2 or 3,
**characterized in that**
the food is heated to a temperature of 72 °C to 75 °C and maintained at this temperature for a period of time of 15 s - 30 s, or
the food is heated to a temperature of 85 °C to 90 °C and maintained at this temperature for a period of time of 1 s - 20 s, or
the food is heated to a temperature of 130 °C to 140 °C and maintained at this temperature for a period of time of 0.1 s - 30 s.

## Revendications

1. Procédé qui permet de fabriquer une préparation humide de protéines végétales destinée à un aliment et qui consiste à
- introduire, dans un agent d'extraction aqueux comportant une teneur en sels, une matière première végétale contenant des protéines, pour ainsi obtenir une solution saline de protéines végétales,
- précipiter les protéines contenues dans la solution saline de protéines végétales par l'abaissement d'une température et/ou d'une force ionique de ladite solution de protéines végétales, et
- séparer, de l'agent d'extraction aqueux, les protéines précipitées de manière à les obtenir sous forme d'une masse humide riche en protéines,
**caractérisé en ce que**
l'on chauffe soit la solution de protéines végétales après l'étape de précipitation des protéines soit la masse humide riche en protéines, à une température ≥ 45 °C pour maintenir cette température pendant une certaine durée, ladite durée et ladite température étant choisies de manière à ce que cette étape de vienne pas modifier les propriétés d'application et de transformation de la masse humide riche en protéines.

2. Procédé de fabrication d'un aliment auquel on ajoute une préparation humide de protéines issue de protéines végétales,
- ladite préparation de protéines étant fabriquée en
- introduisant, dans un agent d'extraction aqueux comportant une teneur en sels, une matière première végétale contenant des protéines, pour ainsi obtenir une solution saline de protéines végétales,
- précipitant les protéines contenues dans la solution saline de protéines végétales par l'abaissement d'une température et/ou d'une force ionique de ladite solution de protéines végétales, et
- séparant, de l'agent d'extraction aqueux, les protéines précipitées de manière à les obtenir sous forme d'une masse humide riche en protéines,
**caractérisé en ce que**
l'on chauffe soit la solution de protéines végétales après l'étape de précipitation des protéines soit la masse humide riche en protéines avant ou après son introduction dans ledit aliment et avant de terminer la fabrication dudit aliment, à une température ≥ 45 °C pour maintenir cette température pendant une certaine durée, ladite durée et ladite température étant choisies de manière à ce que cette étape de vienne pas modifier les propriétés d'application et de transformation de la masse humide riche en protéines.

3. Procédé selon les revendications 1 ou 2,
**caractérisé en ce que**
ladite durée et ladite température sont choisies de manière à éviter dans une large mesure la dénaturation thermique irréversible des protéines.

4. Procédé selon les revendications 2 ou 3,
**caractérisé en ce que**
ledit aliment est chauffé, ensemble avec ladite masse riche en protéines, à une température ≥ 55 °C pour être maintenu à cette température pendant une durée de plusieurs minutes.

5. Procédé selon l'une des revendications 1 à 4,
**caractérisé en ce que**
soit la masse riche en protéines soit la solution de protéines végétales après la précipitation, est chauffée à une température comprise entre 55 °C et 75 °C pour être maintenue à cette température pendant la durée choisie.

6. Procédé selon la revendication 5,
**caractérisé en ce que**
soit la masse riche en protéines soit la solution de protéines végétales après à la précipitation, est maintenue à ladite température pendant une durée comprise entre 40 min. et 1 min.

7. Procédé selon l'une des revendications 1 à 3,
**caractérisé en ce que**
soit la masse riche en protéines soit la solution de protéines végétales, est chauffée à une température comprise entre 75 °C et 85 °C pour être maintenue à cette température pendant une durée comprise entre 60 s et 1 s.

8. Procédé selon l'une des revendications 1 à 3,
**caractérisé en ce que**
soit la masse riche en protéines soit la solution de protéines végétales, est chauffée à une température comprise entre 85 °C et 140 °C pour être maintenue à cette température pendant une durée comprise entre 1 s et 0,1 s.

9. Procédé selon l'une des revendications 1 à 8,
**caractérisé en ce que**
la matière première végétale contenant des protéines est introduite dans une solution saline aqueuse servant d'agent d'extraction aqueux selon un rapport compris entre 1 : 3 et 1 : 20, notamment entre 1 : 5 et 1 : 10.

10. Procédé selon la revendication 9,
**caractérisé en ce que**
la teneur en sels de ladite solution saline aqueuse est ajustée de manière à ce qu'elle soit comprise entre 0,5 et 10 % en poids, notamment entre 2 et 4 % en poids.

11. Procédé selon les revendications 9 ou 10,
**caractérisé en ce que**,
pour extraire lesdites protéines, la solution saline aqueuse est chauffée à une température inférieure ou égale à 30 °C ou comprise entre 40 et 50 °C.

12. Procédé selon l'une des revendications 1 à 11,
**caractérisé en ce que**,
pour précipiter lesdites protéines, la solution de protéines végétales est mélangée avec de l'eau exempte de sels ou pauvre en sels selon un rapport compris entre 1 : 1 et 1 : 10, de préférence entre 1 : 2 et 1 : 4.

13. Procédé selon l'une des revendications 1 à 12,
**caractérisé en ce que**,
pour précipiter lesdites protéines, la solution de protéines végétales est refroidie, le refroidissement étant notamment réalisé par mélange avec de l'eau glacée.

14. Procédé selon l'une des revendications 1 à 11,
**caractérisé en ce que**,
pour précipiter lesdits protéines, la solution de protéines végétales est diluée avec de l'eau exempte de sels ou pauvre en sels pour ensuite être refroidie.

15. Procédé selon l'une des revendications 1 à 11,
**caractérisé en ce que**
pour précipiter lesdites protéines, la solution de protéines végétales est mélangée avec de l'eau glacée exempte de sels ou pauvre en sels selon un rapport compris entre 1 : 1 et 1 : 10, de préférence entre 1 : 2 et 1 : 4.

16. Procédé selon la revendication 4,
**caractérisé en ce que**
ledit aliment est maintenu à ladite température durant 10 min. à 60 min.

17. Procédé selon l'une des revendications 2 ou 3,
**caractérisé en ce que**
ledit aliment est chauffé à une température comprise entre 72 °C et 75 °C pour être maintenu à cette température pendant une durée comprise entre 15 s et 30 s, ou
ledit aliment est chauffé à une température comprise entre 85 °C et 90 °C pour être maintenu à cette température pendant une durée comprise entre 1 s et 20 s, ou
ledit aliment est chauffé à une température comprise entre 130 °C et 140 °C pour être maintenu à cette température pendant une durée comprise entre 0,1 s et 30 s.
